# EUROPEAN PATENT APPLICATION

(11) **EP 1 342 944 A1**
(43) Date of publication of application: **10.09.2003**
(21) Application number: 03004797.1
(22) Date of filing: 05.03.2003
(51) Int. Cl.: F16L 33/22, F16L 19/04

(54) **A connecting device for coupling a flexible tube to either a tap or a rigid pipe**

(30) Priority: 08.03.2002 IT TO20020047 U
(71) Applicant: Famfer S.N.C. Di Riccardo Ferrero & C., 12060 Farigliano (CN) (IT)
(72) Inventor: Ferrero, Riccardo, Via Dogliani No. 84, 12060 Farigliano (IT)
(74) Representative: Robba, Pierpaolo

(57) **Abstract**

The present invention refers to a device for coupling a flexible pipe (5) to either a tap (15) or a rigid pipe, that can be effectively mounted without having to use tools. The connector according to the invention comprises a male member (1) and a nut (3) and does not require any metal clamp to fasten the flexible pipe (5) to the male member (1). By simply acting on the nut (3) it is possible to achieve the simultaneous fastening of the pipe (5) to the male member (1) and of the male member (1) to either the tap (15) or the rigid pipe.

## Description

The present invention relates to a device for joining a flexible pipe to either a tap or a rigid pipe.

More precisely the present invention refers to a fitting or connecting member for flexible pipes or hoses that can be effectively mounted without using any tool.

Fitting devices for coupling flexible pipes usually provide for a nut and a male member. The pipe is fitted over the male member, usually of a cylindrical shape, and is secured to it through a metal clamp or strap, that can be tightened around the pipe by means of a screw; the male member engages the nut, also of cylindrical shape and provided with an inner thread through which it can be screwed to a tap or to a rigid pipe.

Said connectors have the drawback of requiring a screwdriver or a wrench to tighten the metal clamp around the pipe to ensure the fastening of this latter to the male member. Moreover, the clamp can damage the flexible pipe either in the long run or because of an excessive tightening.

On the other hand the present invention refers to a device through which the flexible pipe is firmly and safely secured to the male member without requiring the use of a metal clamp and therefore of tools, but simply using the hands.

Coupling devices not requiring metal clamps have proposed in the past. In these known connectors at least the component of the fixing device that is disposed outside the pipe has a conical cross section rather than a cylindrical one: this way when the diameter of the conical member becomes sufficiently small with respect to the diameter of the male member inside the pipe, said pipe is being crushed between the two fixing components and a metal clamp is no longer required.

An example of this type of connectors is disclosed in European patent EP 449,105.

The connector disclosed in the above patent has the drawback of requiring a third additional component besides the male member and the nut: that is the above mentioned fixing member having a conical cross section (usually a bushing). Therefore, the fastening occurs in two steps: firstly the conical bushing ensures the fastening of the flexible pipe to the male member; then the nut, by engaging the male member, secures the male member - pipe assembly to the tap.

The device illustrated in US 4,951,976 overcomes such drawback by accomplishing the fastening through the co-operation of the male member and the nut: the nut, with a conical cross section, ensures the fastening of the pipe to the male member; and the male member has an outer thread on the end portion outside the pipe, that can engage a thread formed on a tap or a rigid pipe for carrying out the fastening.

Therefore, in this device too the fastening is accomplished in two steps, since it is necessary to screw the nut to the male member and then to screw the male member to the tap or the rigid pipe to which said male member is directly and permanently secured.

It is the main object of the present invention to realise a connecting device for flexible pipes that does not require a metal clamp, thus eliminating the need of using tools, and in which, by simply screwing the nut to either a tap or a rigid pipe, it is possible to simultaneously achieve the blocking of the pipe to the male member and of the male member to either the tap or the rigid pipe.

The above and other objects are accomplished through a connecting device according to the invention as claimed in the attached claims.

In the following reference will be made to a connecting device between a flexible pipe and a tap, but it is understood that a device according to the invention would also allow the connection between a flexible pipe and a rigid pipe, or to another similar cylindrical surface provided with an inner or an outer thread.

The fastening between the pipe and the male member is accomplished thanks to the particular shapes of the male member and the nut. The male member has a mouthpiece cylindrical portion and a barbed conical portion for retaining the flexible pipe. In a similar manner, the nut provides for a threaded cylindrical portion acting as a guide for the sealing head of the male member and fastening this latter to the tap, as well as a conical portion having the same tapering of the conical portion in the male member and co-operating with this latter for fastening the pipe to the male member.

A preferred embodiment of the invention will be described with reference to the attached Figure, that shows a longitudinal cross section of the connecting device.

Said device comprises a male member 1 and a nut 3. Said members are preferably made of metal, but could also be made of a suitable plastic material.

The male member 1 has a mouthpiece portion 1a that is cylindrical or with a different shape according to the shape of the member to be joined, and a frusto-conical portion 1b over which a flexible pipe 5 is fitted until it abuts against a flange 13.

The diameter D4 of the frusto-conical end 1c of the male member 1 is slightly smaller than the inner diameter D7 of the flexible pipe 5, for an easier fitting of the pipe 5 over the male member 1, through the conical end surface 1e of said male member 1. Adjacent to such conical surface 1e there is provided a smooth cylindrical section 1f for the purpose of preventing that the barbs or indentations on the male member damage the flexible pipe in case a strong side pulling is applied to the tube.

On the other hand the maximum inner diameter D3 of the conical portion 1b is larger than the inner diameter D7 of the flexible pipe 5, whereby the elastic deformation of said pipe 5 helps to ensure a very strong adherence to the male member 1.

For the same purpose, on the outer surface of the conical portion 1b of the male member 1 annular barbs or indentations 11 are formed that grip the inner surface of the flexible pipe 5, further facilitating the fastening of said pipe 5 to the male member 1.

The cylindrical portion 1a of the male member 1, that represents the seal head of said male member 1, provides for an outer groove 9 for housing an annular sealing gasket 7. The size and the shape of said seal head 1a and gasket 7 are defined by the size and the shape of the inner surface of the mouthpiece 15a of the tap 15 to which the pipe 5 is to be coupled.

To allow the free flow of the water or other fluid through the pipe 5, the male member 1 has a central cylindrical passage or axial bore 1d extending throughout its length.

In a corresponding manner, the nut 3 has a cylindrical portion 3a and a frusto-conical portion 3b.

The frusto-conical portion 3b has an axial conical hole or passage tapering towards the end of said frusto-conical portion 3b opposite to the cylindrical portion 3a, with the same conicity of the conical portion 1b in the male member 1, and with a maximum inner diameter D5 slightly larger than the maximum outer diameter D3 of the male member 1, so as to define - inside said nut 3 - a tapered surface substantially parallel to that of the conical portion 1b of the male member 1. In such a way, the nut 3 is able to co-operate with said male member 1 to radially grip said flexible pipe 5 against said male member 1.

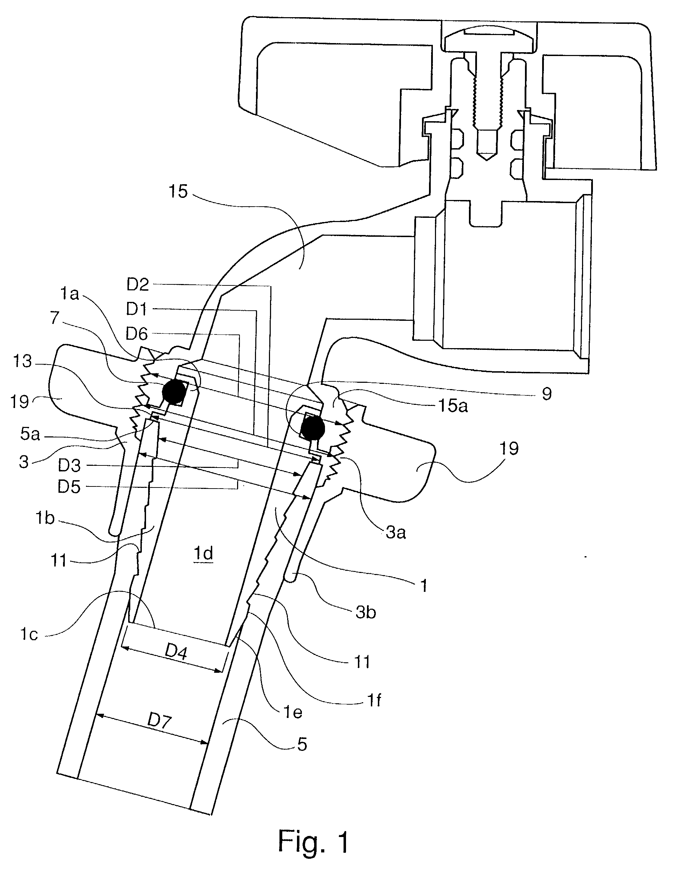

With reference to the connector shown in Figure 1, the cylindrical portion 3a of the nut 3 is provided with an inner thread matching the outer thread of the mouthpiece 15a of the tap 15. In case the mouthpiece 15a is equipped with an inner thread, the connector according to the invention could nevertheless be used by employing a nut having an inner rather than an outer threaded cylindrical portion In both cases, the outer diameter D6 of the mouthpiece 15a to which the flexible pipe 5 is to be coupled determines the inner diameter D1 of the cylindrical portion 3a of the nut 3. It is clear that in turn the diameter D1 determines the maximum outer diameter D2 of the male member 1, which has to be slightly smaller than said diameter D1.

Advantageously, to facilitate the screwing of the nut 3 onto the tap, two diametrically opposite radial fins 19 are formed on the outer surface of the cylindrical portion 3a of the nut 3.

Since the nut 3 and the male member 1 are firmly secured to one other by the co-operation of the corresponding conical portions 3b, 1b, as the nut 3 is gradually screwed onto the tap 15, the seal head 1a is progressively pressed against the inner wall of the mouthpiece 15a of the tap 15, thus accomplishing its fastening to the tap 15, which fastening is rendered tight by the presence of the annular gasket 7. The cross section of said gasket 7, in the preferred embodiment illustrated in the Figure, is circular, but could equally have a flat shape or be of a different shape, so as to realise the sealing between two surfaces that are flat or have a different shape, in accordance with the shape of the component to be coupled.

It is pointed out that in the device according to the invention the flange 13 of the male member 1 abuts against the end 5a of the flexible pipe 5 and therefore the coupling between the male member 1 and the nut 3 is accomplished indirectly, i.e. through the interposed pipe 5. In other words, in the device according to the invention there is no point of direct contact between the male member 1 and the nut 3, and such feature can prove to be very advantageous to ensure a perfect seal both between the male member and the tap and between the flexible pipe and the male member.

Besides, the long thread of the nut 3 allows the coupling of pipes 5 with different inner diameters and different thicknesses.

## Claims

1. A device for coupling a flexible tube (5) either to a tap (15) or to a rigid pipe having a mouthpiece provided with an inner or an outer thread, said device comprising:
- a male member (1), provided with an axial bore (1d) for the passage of a fluid, in which there is defined:
a mouthpiece portion (1a), said mouthpiece portion being cylindrical or of a different shape, its shape and size being anyhow compatible with those of the inner wall of said mouthpiece (15a) of said tap or rigid pipe to which said flexible pipe (5) is to be coupled, said mouthpiece portion having an outer flange (13) and a groove (9) housing an annular sealing gasket (7) that is flat or of other shape adapted to match the element to be coupled and providing an axial and radial sealing on said mouthpiece portion (1a) and on said annular flange (13), and a conical portion (1b) on which said flexible pipe can be fitted; and
a nut (3) having a cylindrical portion (3a), provided with an inner or an outer thread and adapted to be screwed onto the tap or rigid pipe to which said flexible pipe must be coupled, and a frusto-conical portion (3b), said frusto-conical portion (3b) having an axial conical bore tapering towards the end of said conical portion (3b) opposite to the cylindrical portion (3a) so as to define - inside said nut 3 - a tapered surface substantially parallel to that of the conical portion of the male member (1), said tapering surface co-operating with the conical portion (1b) of the male member to radially grip said flexible pipe against the male member (1) when the nut (3) is being screwed, and to axially push said male member against the tap or the rigid pipe to which said flexible pipe is to be coupled.

2. A device as claimed in claim 1, wherein the conical portion (1b) of the outer surface of said male member (1) is formed with annular barbs or indentations (11).

3. A device as claimed in claim 1 or 2, wherein on the free end of said male member (1) there is provided a conical surface (1e) adjacent to a smooth cylindrical section (1f) for guiding the flexible tube (5) and preventing said barbs (11) on the male member from damaging said flexible pipe (5) in case a strong side pulling is applied to the tube.

4. A device as claimed in claim 1, wherein said nut (3) has a pair of diametrically opposite radial fins (19).

5. A device as claimed in claim 1, wherein said male member (1) and said nut (3) are made of metal.

6. A device as claimed in claim 1, wherein said male member (1) and said nut (3) are made of a plastic material.
